(19) **Europäisches Patentamt**

**European Patent Office**

**Office européen des brevets**

(11) **EP 1 404 448 B1**

(12) **EUROPEAN PATENT SPECIFICATION**

(45) Date of publication and mention
of the grant of the patent:
**20.09.2006 Bulletin 2006/38**

(51) Int Cl.:
***B01L 3/00*** *(2006.01)*  ***B01J 19/00*** *(2006.01)*
***B81B 1/00*** *(2006.01)*

(21) Application number: **02765157.9**

(22) Date of filing: **04.07.2002**

(86) International application number:
**PCT/IB2002/003220**

(87) International publication number:
**WO 2003/004160 (16.01.2003 Gazette 2003/03)**

(54) **MICROFLUIDIC CHEMICAL ASSAY APPARATUS AND METHOD**

MIKROFLUIDISCHE VORRICHTUNG UND VERFAHREN FÜR CHEMISCHE VERSUCHE

DISPOSITIF ET PROCEDE DE DOSAGE CHIMIQUE MICROFLUIDIQUE

(84) Designated Contracting States:
**AT BE BG CH CY CZ DE DK EE ES FI FR GB GR
IE IT LI LU MC NL PT SE SK TR**

(30) Priority: **04.07.2001 GB 0116384**

(43) Date of publication of application:
**07.04.2004 Bulletin 2004/15**

(73) Proprietor: **Diagnoswiss S.A.
1870 Monthey (CH)**

(72) Inventors:
• **ROSSIER, Joel, S.
1913 Saillon (CH)**
• **MICHEL, Philippe
1868 Collombey (CH)**
• **REYMOND, Frédéric
1093 La Conversion (CH)**

(74) Representative: **Hanson, William Bennett et al
Bromhead Johnson,
Kingsbourne House,
229-231 High Holborn
London WC1V 7DP (GB)**

(56) References cited:
**EP-A- 0 455 508          WO-A-00/41214
WO-A-00/43766          US-A- 5 580 523
US-A- 5 593 838          US-A- 5 992 820
US-A- 6 046 056          US-A- 6 149 787**

## Description

## Field of the invention

This invention relates to apparatus and methods for performing fully or semi-automated electrochemical assays or reactions in micro fluidic chips.

## Background of the Invention

In recent years, the miniaturisation of analytical chemical and biochemical tools has become an expanding field. The main factors encouraging the development of miniaturised chemical apparatus are the desire for decreased analyte consumption, rapid analysis and improved automation capacity. These needs are particularly evident in the field of life sciences, where biomedical diagnostics, genetic analysis, proteomics and high throughput screening in drug discovery are becoming increasingly important. The need to limit analyte consumption is highlighted by the increasing number of assays that are performed, the use of reactants for analysis requiring to be kept as small as possible in order not only to reduce costs but also to limit waste production. In the case of biomedical diagnostics, the analysis of extremely small volumes is often required and the minimisation of analysis time is desirable, as are simplified handling procedures that decrease manipulations and minimise cross-contamination from sample to sample. Previously, two different but complementary strategies have been investigated for achieving these goals: microfluidic devices and high density 2-D arrays with immobilized affinity reagents.

In the field of micro-analytical systems, a very important issue for the development of true operational devices is the automation of the assays, since the reproducibility of the measurements as well as the number of analyses that can be performed can thus be significantly improved. For the automation of measurements using microsystems, the most critical point is probably the reagent dispensing system. Until now, some automated devices have been developed for micromethods based on highly dense parallel networks, such as arrays of microspots or microwells. In these cases, the delivery systems are generally composed of one or several needles allowing the aspiration and the dispensing of the required volumes of reagents at very precise points. In the case of microfluidic systems, an additional key problem for the automation of measurements is the filling of microchannels and controlling the movement of reagents within them. Microfluidic automated devices based on capillary electrophoresis have been developed in the past, for example a full DNA analyser was implemented in a single device with a polymerase chain reaction chamber followed by electrophoretic separation.

Some automated analytical methods in which micropipette tips are used both as the reaction solid phases and for reagent handling have been previously developed. This was done by immobilising biomolecules, such as antibodies, on the walls of the tips and by using these tips to pipette the reagents. Using this kind of approach, the contamination risks from sample to sample can be limited. The connection of the microfluidic devices with external sample solution has been addressed by different means, such as connecting the microfluidic chip to a capillary and then dipping the capillary in the sample solution and pumping the solution inside the microchip by electroosmotic flow (WO 00/21666). In other cases, the chip is connected to a number of microsyringe pumps so as to deliver the sample inside the microchip (WO 01/63270). Some devices have used pulses to let the sample enter the chip with gas or high voltage (US 6,395,232). Others have used capillary fill from a needle etched channel tip to have their channel sampled by capillary action and to perform electrochemical assays such as glucose detection (Sensor Actuator A Vol 95, 2002, 108-113 . Such method does not enable any control of the fluidics within the channel.

US 5 580 523 A discloses an integrated chemical synthesiser having reactors which may be of the electrochemical type.

When performing analytical assays it is of prime importance to control the flow rate during sample delivery. Indeed, due to the very small volume of the channel (in the order of picolitres to microlitres) small variations in the sample flow rate induce dramatic variation in the volume that is transferred through the channel. If a reaction involves immunosorption or physisorption for instance, sever deviation of the detection can occur for the same sample concentration. For this reason, the present invention aims to control and monitor the flow of the sample solution by electrochemical means.

## Summary of the Invention

The invention is defined by the scope of appended claims 1, 36 and 58, with dependent claims defining preferred embodiments.

The apparatus and related methods of the present invention are suitable for performing fully automated or semi-automated assays or reactions in microchips. The microchips include microchannels or microchannel arrays or networks, enabling handling of sample and reagents as well as achievement of reactions followed by electrochemical events. They can also be used for reagent handling only, for instance in the case where the present apparatus is used to uptake or dispense fluids from a microchip.

Generally, the microchips incorporate sealed microchannels with two apertures (one at each extremity) and they can be fabricated using different materials including conductive ones for their use in electrochemical assays.

One or several individual or interconnected microchips can be fabricated individually and/or on the same support. They can be used individually or as an array of independent or interconnected microstructures.

Preferably, the lower extremity of the microchip incorporates at least one tip connected to the microchannel(s) that will be placed in contact with the sample solution to be analysed or to react. The upper part of the microchip preferably contains an outlet for the microchannel(s) that can be connected with an automated microfluidic control device allowing filling and/or emptying of the microchannels. In some embodiments, the fluidic control device may be a simple micropipette for mechanical pumping. Preferably, the microchips are capable of displacement (e.g. sequential displacement) in x, y and/or z directions, either by automated means or manually.

The control of the flow in the microstructure during the sampling is important to enable reproducible results. For this reason, the apparatus incorporates an integral electrode for monitoring the fluid flow in the microstructure. It is well known to use an electrode not only for detecting if a channel is filled or empty but also for measuring the flow of solution by amperometry. Conductivity detection may be utilised to measure the time required for the solution to cross the microstructure. This can be done by having different electrode pairs at the entrance, at different places along the microstructure and at the inlet or outlet of the microstructure. Fluidic control can be performed by monitoring the flow rate by means of amperometrical detection, it having been demonstrated previously that the detected current depends upon the flow rate according to the Ilkowich equation:

$$I = 0.925 nFcL(lD)^{2/3} (Fv/h^2d)^{1/3}$$

Where $I$ is the current, $n$ the number of electrons exchanged per oxidised molecule, $L$ the width of the electrode, $l$ the length of the electrode, $D$ the diffusion coefficient of the oxidised molecule, $Fv$ the flow rate, $h$ the half-height of the channel, $d$ the with of the channel.

It is notable that this kind of electrochemical measurement may be quantitative (i.e. when amperometry is used to monitor the concentration of an electroactive species). Therefore, the signal measured during the sample loading, during the various steps of an assay (incubation, washing, etc.) or during the addition of reagents can be used to adjust the detection signal obtained at the end of the assay. As an illustration, in the case of e.g. an immunosorbent assay, the current measured during sample loading, washing steps or reagent additions varies from microstructure to microstructure, and the signal obtained at the end of the assay is very likely to be different from microstructure to microstructure. Indeed, the variation of the measured current indicates that the flow rates were not equal in all microchannels, nor, possibly, in all steps of the assay. As a consequence, the time of residence of the molecules in the microstructures varies, which also generates variation of the final values obtained for the assay. With electrochemical control of the fluidics, it is then possible to correct for these variations and hence to improve the accuracy and the repeatability of the assays.

In this manner, the apparatus and methods of this invention provide a means for conducting analysis with an internal calibration of the assay. As an example, samples with slight changes in the viscosity shall flow within the microstructure at different rates; similarly, solutions may be pumped or pushed within the microstructure at various rates depending on the precision of the microfluidic control unit. One great advantage of the present apparatus is that these variations can be monitored by means of the electrochemical unit. The final result of the analysis can thus be corrected by taking account of the microfluidic variations monitored electrochemically during the various steps of the assay. Such measurements and the subsequent data processing therefore provide an internal calibration, which greatly improves the accuracy and the repeatability of the analyses.

The microchips may also contain means for temperature control, for minimisation of electronic noise and for minimisation of evaporation.

Prior to use of apparatus according to the invention, the reagents are dispensed into a microchannel or into an array of microstructures. The tips of the microchips composing the microstructure inlets are immersed in wells or reservoirs and the fluidic control system allows the filling and/or the emptying of the microstructure(s) with the reagents. Using this technique with embodiments possessing a plurality of microstructures, all the microstructures may be filled with the same or with different reagents simultaneously, and sample-to-sample contamination risks are thus limited. For some applications, the microstructure tip(s) can be integrated in a reservoir in which the sample can be loaded.

The system can be used to perform reactions or assays in the microchannels. It can be employed in the presence of a molecular phase in solution or attached on the surface of the microstructure or on a solid material integrated in the microstructure, for example a membrane, a filter, beads or the like.

Depending on the reaction or assay, detection can be performed using various principles. The transducer which is necessary for signal measurements can be placed in close contact or even integrated in the microchips.

The term "microchip" as used herein refers to any system comprising at least one miniaturised structure (or microstructure) which is a reaction or separation chamber or a conduit like a micro-well, a micro-channel, a micro-hole and the like, not limited in size and shape but enabling micro-fluidic manipulations. In the present invention, at least one such miniaturised structure(s) comprises at least one electrode so as to perform electrochemical assay(s) (as defined below). The electrode is connected to the fluidic control apparatus and used for different electrochemical events (as described below). In all cases, the electrode may serve to check whether or not the channel is filled homogeneously during the sampling and/or assay steps and to control whether each channel is empty or if change in solution has been made during a multi-step experiment. Important parameters such as the flow rate can be controlled at any time during the assay by electrochemical means. In that sense, the presence of the electrode as connected to the microfluidic control unit is unique and provides various advantages over similar approaches using optical detection and where the flow rate cannot be monitored as precisely.

The term "microchannel" as used herein refers to a single microchannel, an array of microchannels or a network of interconnected microchannels, not limited in number or shape but being sealed and having a cross section enabling microfluidic manipulation.

The microchips and microchannels are preferably disposable and may be fabricated from various materials, for example glass, quartz, polymer (e.g. polyethylene, polystyrene, polyethylene terephthalate, polymethylmethacrylate, polyimide, polycarbonate, polyurethane or polyolefines), a series of polymers or any combination of the aforesaid. They may also contain supplementary elements such as, but not limited to, membranes, chambers with beads, solid phase, sol-gel, electrodes, conducting pads or coils to control temperature and/or electrokinetic flow. The electrodes may be used to perform electrochemical measurements or to apply a high voltage for transferring the sample to a mass spectrometer by an electrospraying technique.

The term "tip" is intended to refer to the extremity of the miniaturised structure(s) contained in the microchip, from which a sample is either loaded into the miniaturised structure or dispensed out of the miniaturised structure. The term "connection end" (also referred to as "connection extremity") is intended to refer to the second extremity of the miniaturised structure which is connected to the microfluidic control unit of the apparatus of this invention. For clarity, in the case where the miniaturised structure is a microchannel, the tip refers to either the inlet or the outlet of the microchannel that is not connected to the microfluidic control unit (also referred to as "pipetting device" in relation to some embodiments). The tip can be fabricated with different geometrical features such as to have a microchannel entrance in the direction of the microchannel or perpendicular to it or at the side wall of the microchannel; it can be immersed in a reservoir or be surrounded by a fluid reservoir; finally, the tip is preferentially made of the same body as the microchip itself, without extension to external capillary or connection system.

The term "microfluidic control unit" or "pipetting device" means a device comprising tubes or capillaries and enabling the generation of non-turbulent molecular flux, by convection, migration or a combination thereof; the connection between the microchip and the microfluidic control unit can be made by clamping the microchip so as to place the microfluidic connections in aligned position with respect to the connection end(s) of the microstructure; the microfluidic control unit provides a means capable of generating a flux of molecules by controlled pulling or pushing of solution and/or to block the solution in the miniaturised structures when this is necessary during a reaction or a waiting time. The microfluidic connection unit may also be advantageously coupled to solution reservoirs containing the reagents necessary to perform a reaction or an assay, as well as blocking agents, buffers, washing solutions and the like.

The term "electrochemical assay" shall mean any electrochemical experiment using electrical conductivity and/or power in order to perform a reduction, an oxidation or an ion transfer reaction, or to perform conductimetry and/or impedance measurements, or to generate an electric field in a solution, as for instance to perform ionophoresis or patch clamp measurements, or to induce electro-osmosis or electrokinetic pumping or to generate an electrospray as may for instance be used to transfer molecules from the tip of a miniaturised structure into a mass spectrometer.

The apparatus of this invention also comprises an "electrochemical unit" which is the electronic apparatus required to perform any of the above-mentioned electrochemical assays. It may for instance include conductive pads allowing electrical connection between the solution present in the miniaturised structure(s) and the device used to perform the electrochemical assay (for example, a potentiostat, a source of controlled electrical power, an impedance measurement unit, and the like).

The combination of the above elements enables the performance of accurate electrochemical assays in microchips: a miniaturised structure comprising a tip means to load and/or dispense a sample, as well as a connection to a microfluidic control unit, and at least one electrode connected to the electrochemical unit permitting the carrying out of electrochemical assay(s).

In some applications, an electroactive species may be advantageously added to the sample solution in order to follow the microfluidics by generation of an electrochemical signal, for example the current resulting from the reduction and/or the oxidation of this electrochemical species or the resistance along the microstructure. This may be advantageously used to provide an internal calibration of the analysis performed with the present apparatus, since the final results may be corrected according to the variations of the electrochemical signal measured during the microfluidic steps of the assays.

The apparatus of this invention may also be advantageously connected to or even integrated within a computer, thereby allowing on-line data processing and computerised control of the assays or reactions.

This apparatus is preferentially used to perform biological or chemical analysis or reactions, such as but not limited to any kind of mass spectrometry measurements, *in vitro* and *in vivo* diagnostic assays, all sorts of affinity or toxicological assays and of physico-chemical characterisations, or combinatorial synthesis of compounds.

**Detailed Description of the Invention**

The invention is hereinafter described in more detail by way of example only, with reference to the attached figures, in which:

Figure 1 is a schematic representation showing some examples of microchips and microchannel structures and connections according to the invention;

Figure 2 is a schematic representation showing a side view (A) and a plan view (B) of an embodiment of apparatus according to the present invention;

Figure 3 is a schematic representation of an embodiment of apparatus according to the invention, comprising a series of microchannels connected with an automated system allowing both the aspiration of the reagents and the displacement of the microchips in x, y and z directions;

Figure 4 is a schematic representation of the principle of a sandwich immunoassay performed in a microchip placed in an embodiment of apparatus according to the invention;

Figure 5 is a schematic representation of the interfacing of a series of microchannels with a mass spectrometer using an embodiment of apparatus according to the invention;

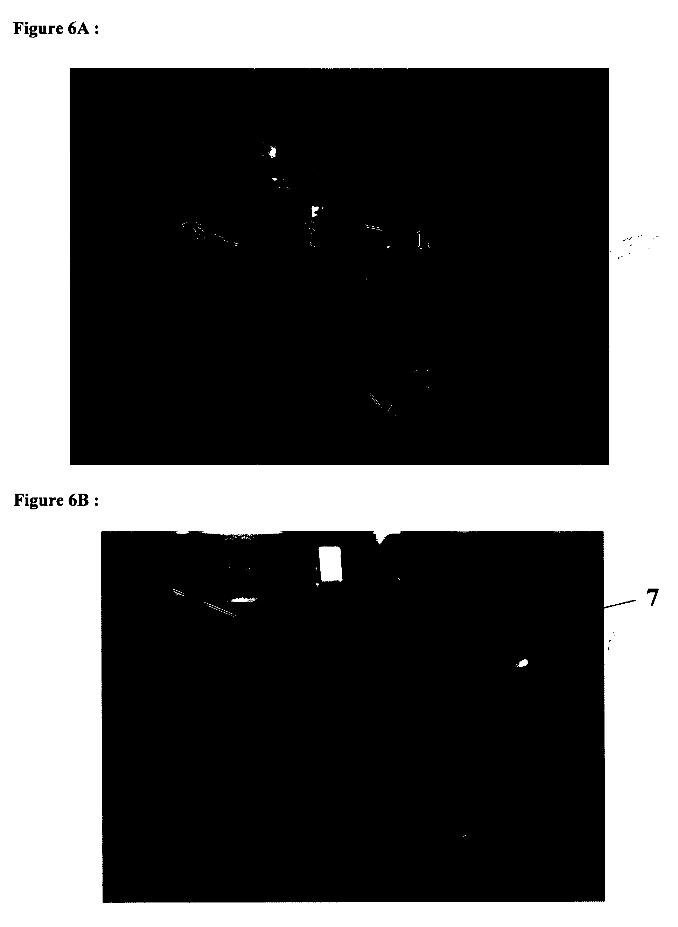

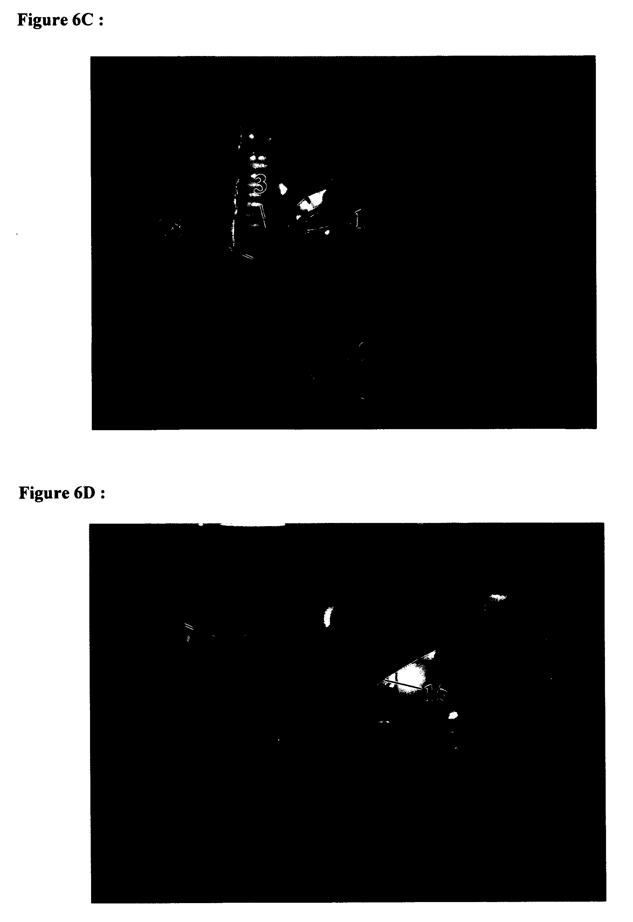

Figure 6 is a series of photographs of an embodiment of apparatus according to the present invention which is used to take a sample placed in solution reservoirs 18 (here a microtiter plate); Figure 6A shows a general view of the apparatus with the microchip comprising a series of 8 microstructures that is supported in a Plexiglas system enabling connection to the electrochemical unit (not shown) by way of the electrical pads 15 integrated on the microchip, as well as connection to the microfluidic control unit (only partially shown) by way of small connecting holes 10 and tubings 10'; Figure 6B shows a closer view of the microchip and the connection systems to the electrochemical and microfluidic control units; Figure 6C and 6D show the same parts of apparatus as in Figure 6A and 6B, but in position where the microstructure tips 3 penetrate into the solution reservoirs in order to take the desired samples;

Figure 7 is a photograph of an embodiment of apparatus according to the present invention, which comprises a microchip having microstructure tips at the top of the microchip and surrounded by reservoirs;

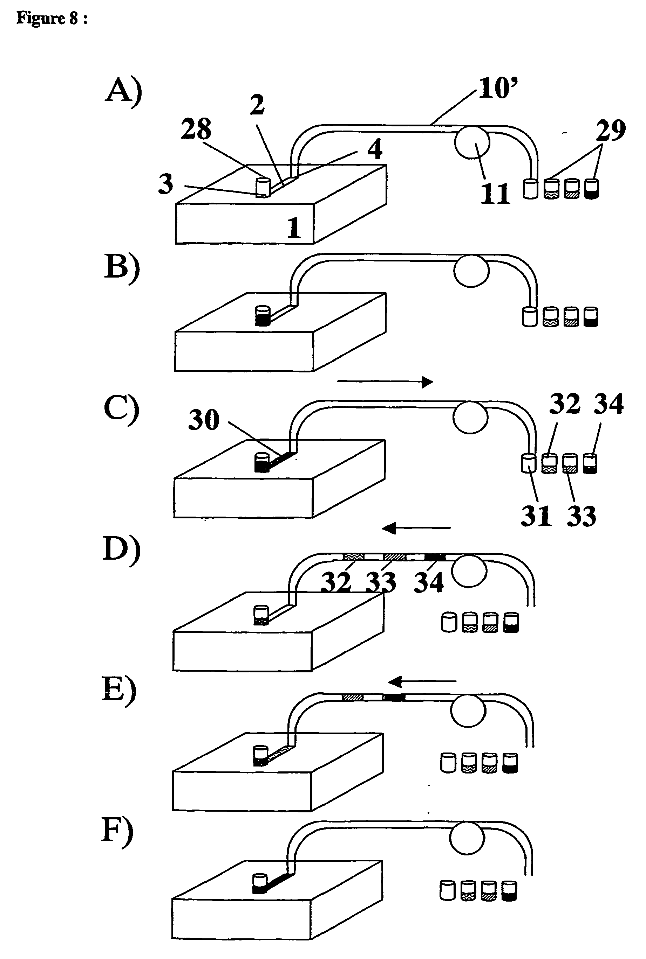

Figure 8 shows the operation sequence of a multi-step assay performed with an embodiment of apparatus of the invention, comprising the steps of: A) connecting a microchip having a microstructure tip surrounded by a reservoir to an electrochemical unit (not shown) and to a microfluidic control unit 11 from which various solutions or even air 31-34 can be pumped, aspirated or blocked in the microstructure; B) loading a sample in the solution reservoir 28; C) filling the microstructure with the sample solution either by capillarity or by aspiration using the microfluidic control unit, and eventually letting the sample solution incubate within the microstructure; D) emptying the microstructure by pumping either air or a solution 31 into the microstructure, thereby expelling the sample solution into the reservoir 28 and filling the connection tubes 10' with one or a series 32-34 of solutions; E) dispensing these solutions into the microstructure; F) performing an electrochemical assay (either during the pumping of one or all solutions 31-32 within the microstructure or upon blocking one, or, sequentially, each of these solutions within the microstructure);

Figure 9 shows the operation sequence of a multi-step assay performed with an embodiment of apparatus according to the invention, similar to the sequence shown in Figure 8, but where the microstructure tip is put in contact with the sample solution and, optionally, where the final step consists in dispensing the analyte solution into a mass spectrometer 25 by generation of an electrospray 26; and

Figure 10 is an example of the result of an electrochemical assay performed with an embodiment of apparatus according to the invention, showing how electrochemical signals can be used to determine the accuracy of the solution flow controlled by the microfluidics control unit. This figure shows the cyclic voltammetric evolution of the detection of 500 $\mu$M of ferrocene methanol under forced convection with the microchannel presented in Figure 3a at 10 mV/s; the insert shows the evolution of the plateau current at 300 mV versus the flow rate between 0.2 and 128 $\mu$L/h.

The basic concept of the invention can be understood with reference to the attached figures, from which the various embodiments of the invention are detailed hereinafter. It is to be understood that each of the channels presented in the figures has an integrated electrode such as to enable flow control as described herein. For clarity purposes, the electrodes are not always illustrated.

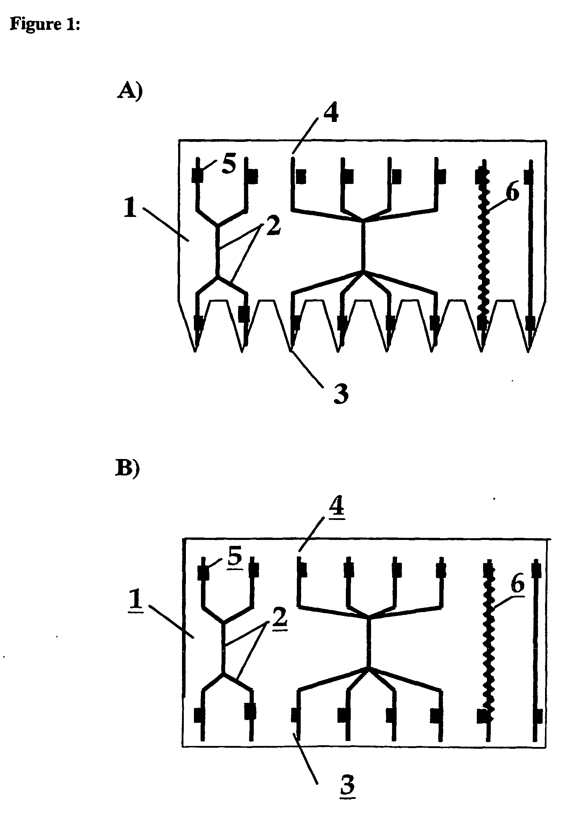

Figure 1 A and B shows an example of microchip 1 with various microchannel shapes of miniaturised structures 2 (single micro-channels and networks of interconnected microchannels). Figure 1A shows the situation where the chip is cut in a triangular shape with the extremity in the edge of the microchannel and 1B shows the chip with an extremity of the channel on the side of the microchannel. Each of these microstructures contains one or a plurality of tips 3 and connection extremities 4. One of these microstructures shows an integrated electrode 5, whereas another of these microstructures shows integrated coils 6. Tip extremities of the microchips contain the microchannel inlets. This figure also shows how some electrodes 5 and coils 6 can be integrated in the channels.

The network of microchannels on the left hand side illustrates that two microchannels can be put in contact in order to perform separation and/or reaction of two solutions that have been pumped simultaneously from the microfluidic tips. As shown in the centre of Figure 1, more than two microchannels are converging into a contacting zone enabling separation and/or reaction. In some embodiments, the micro-fluidic tips are not disposed on the same plane but are made in a multi-layer body that allows disposition in the three dimensions.

The microchannels may also have different surface properties to avoid or favour the adsorption of some compounds on the walls.

The microchannels may also be modified with some porous compounds, as e.g. polycarbonate membranes, microporous Teflon or other polymers, allowing the specific diffusion of gas or liquid. This can for example find applications when the reactions or the assays performed in the microchannels produce gas that needs to be eliminated, or when ion transfer experiment at the interface between two liquids have to be performed (one phase being for instance supported within such porous membrane). Also, membranes to separate physically two solutions or phases can be advantageously integrated in the microchip device. In addition, such porous material may also be used to purify a sample by adsorption of a compound present in the sample.

In the present invention, the fluidic control system may be, but is not limited to, an aspiration system (e.g. involving mechanical or pressure pumping), a capillary force flow device or an electrokinetic driven flow device. The fluidic control device may allow the filling and/or the emptying of the microchannels. The fluidic control system may be connected with an automated device allowing the sequential displacement of the microchips in x, y and/or z directions. In another embodiment, the fluidic control device may also be a simple micropipette allowing mechanical pumping and manual displacement of the microchips.

In some embodiments, the manual or automated displacement device may allow modification of the orientation of the microchannel(s) in order to change the exposition angle of the tip extremity(ies) of the microchannel(s).

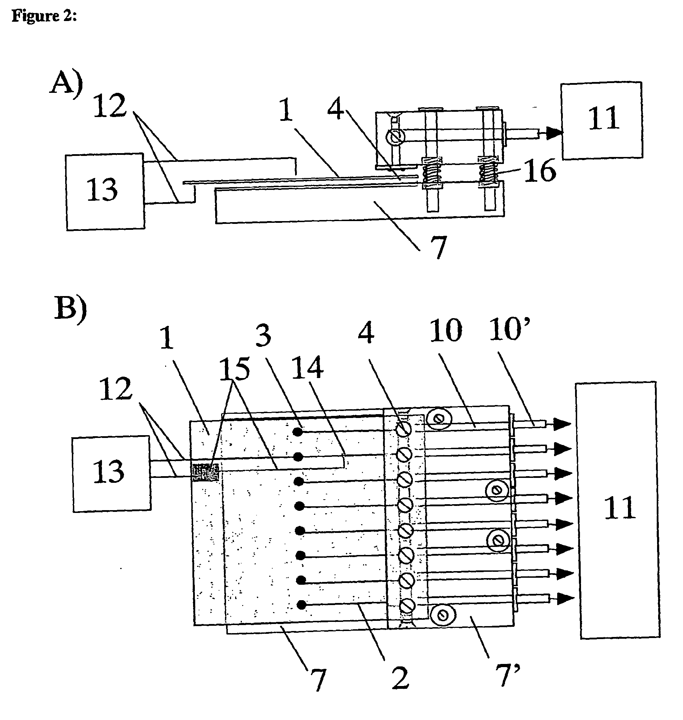

Figure 2 shows a schematic representation (A: side view; B: plan view) of apparatus according to the present invention. The microchip 1 comprises an array of eight miniaturised structures, each being composed of a micro-channel 2, a tip 3 and a connection extremity 4. This microchip is placed in a holder 7 that is manufactured to enable the precise alignment of the connection extremities 4 to the microfluidic control unit 11 by way of conduits, tubes and/or capillaries 10, 10'. The apparatus further comprises electrical connections 12 that allow connection of the electrochemical unit 13 to the electrodes 14 integrated in the miniaturised structures and the electric pads 15 disposed in the microchip (these electrical connections are shown for only one of the eight microstructures).

In one embodiment, a sample solution may be loaded into the microstructures of the apparatus by depositing a drop of solution onto each microchannel tip 3. The microchannels 2 are then filled by capillarity or by aspiration using the fluidic control unit 11 (after having clamped the connection support 16' onto the microchips by application of a pressure onto the springs 17 in order to induce etancheity).

Then, the sample solution may be retrieved out of the microstructure using the microfluidic control unit (for instance by aspiration or pumping of air or of another solution). The microstructures may then be filled and emptied again in order to perform further analysis steps.

In another embodiment, the sample solution may be introduced into the microstructures by pumping using the microfluidic control unit, so as to be able to control the flow rate during such sample introduction. Then, the tips of the microstructures are either used as interfaces to waste reservoirs or as dispensing systems.

The electrochemical unit may also be used at any step of the filling, emptying or blocking of the sample solution in the microstructures in order to perform an electrochemical assay. In some applications, the electrochemical assay (e.g. reduction or oxidation of an electroactive compound, or conductivity or impedance measurements) is performed during all the filling and emptying steps of the analysis in order to obtain a signal measuring the proper control of the microfluidics in each microstructure.

In another embodiment, the apparatus is used to control the filling of the sample within the microstructure. To this end, the chip may be advantageously placed in the apparatus before the tip enters into contact with the sample. In this case, the microstrure is already connected to the microfluidic control unit prior to application of the sample. As the microchip is tightly connected to the microfluidic control unit, air is blocked within the microstructure and cannot escape (no venting possibility). In this manner, when the microstructure tip is put in contact with the sample, this sample cannot fill in the microstructure (no capillary fill can occur), and this can be checked thank to the integrated electrode and the electrochemical unit. In order to let the sample fill in the microstructure, it is necessary to apply a back pressure by means of the microfluidic control unit. In another embodiment, the microchip may also be disconnected from the microfluidic control unit (for instance by actuating a clamping system used to ensure fluid-tight connection between the microstructure and the microfluidic control unit), so that air becomes liable to escape out of the microstructure through its connection end, thereby enabling filling of the microstructure by capillarity. Once filled, the microfluidic control unit is connected again so as to either block the sample within the microstructure or pump or push this sample and/or other solutions. Such control of the filling of sample is very helpful to precisely fix the start point of a reaction (i.e. time equal to zero), which is crucial for the accuracy of experiments that depend on the reaction time (as for instance in enzymatic tests). This blocking method using the apparatus of this invention allows to improve the accuracy of the assays and its repeatability.

In a further embodiment, the chip may have a hydrophobic barrier to prevent the capillary fill of the sample. This will again be controlled by the electrode placed inside the microchannel. In this specific case however, the microchip does not need to be connected to the microfluidic control unit during the application of the sample to the microstructure tip.

In some embodiments, the microfluidic control unit is used during the analysis in order to block an analyte solution within the microstructures. The electrochemical unit may then be advantageously used to induce a molecular flow by application of a potential; in such analysis, the apparatus of this invention may thus be used to perform electrophoresis experiments.

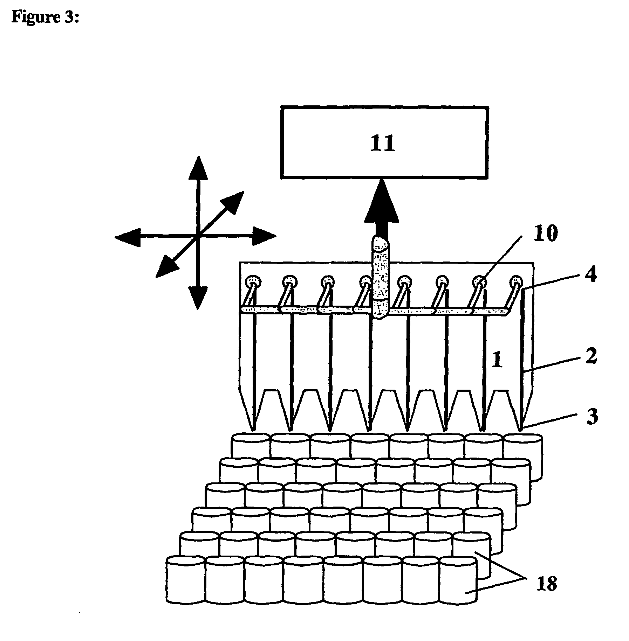

Figure 3 shows how the microchips can be connected with a microfluidic control unit 11, which is here a semi-automated aspiration system similar to a pipeting device, allowing the dispensing of the reagents into the microchannels 2 and the displacement of the microchips 1 in the x, y and z directions. The tips of the microstructures 3 are sequentially immersed in a series of solution reservoirs 18 (represented here as the wells of a microtiterplate) containing various reagents, buffers and/or washing solutions. The microchannels 2 are thus successively filled with the reagents, buffer and/or washing solutions necessary for the reactions or the assays.

In a preferred embodiment, the invention can be applied to the combinatorial chemistry field, whereby molecules are grafted onto the surface of the microstructures and combined with other molecules for the synthesis of new compounds which are then released and analysed.

In some embodiments where the reactions or the assays performed in the microchannels are endothermic, the tip may be heated by incubation of the microchips in a thermostated chamber or by passing current through the integrated electrodes or coils, as schematically shown in Figure 1. Conversely, the temperature of the solution may also be decreased in order to stop the reaction.

In some embodiments, the invention can be used to perform homogeneous or heterogeneous (bio)chemical assays in the microchannels. These assays may involve a highly specific (bio)recognition element such as, but not limited to, an enzyme, antibody, antigen, hapten, nucleic acid, oligonucleotide or peptide. The (bio) recognition element can then be used in solution. Covalent binding may also be achieved in the microchannels with chemical compounds that allow specific (bio) recognition. In this case, the reagents necessary for the assays may be placed in an ELISA plate before measurements. The microchannels can thus for example be used to perform homogeneous or heterogeneous immunoassays.

The microchannels may also contain specific features for performing separation and/or purification. To this end, at least a portion of the microchannel may contain a covalently or physically adsorbed compound or a heterogeneous phase (like a gel, a membrane, beads and the like).

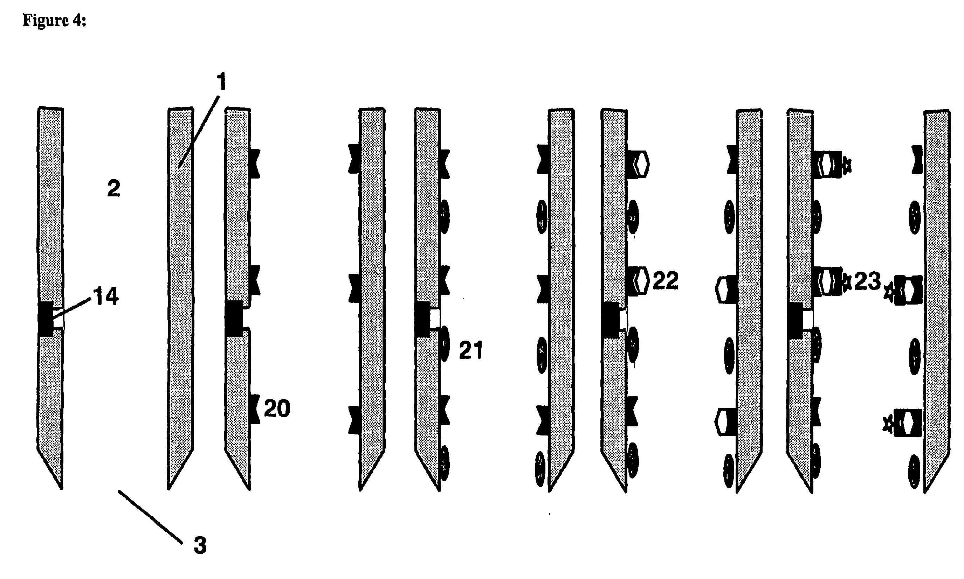

Figure 4 summarises the principle and the successive steps necessary to perform a sandwich immunoassay in microchips 1 incorporating at least one electrode 14, as used in the present invention. The microchannel 2 is first filled with a solution of antibody 20 specific for the analyte. The antibody is thus adsorbed on the walls of the microchannels. The surface is then blocked by incubation of blocking agent 21 (e.g. a solution of BSA). This blocking agent adsorbs on the sites of the channel walls that remained free after adsorption of the antibody 20. This prevents the non-specific binding that could occur in the following steps of the assay. The samples to be analysed are then incubated, which leads to the binding of the desired analyte 22 with the antibody 20. The last step involves incubating a labelled conjugated antibody 23 specific for the analyte. Between each step, the channels are normally washed with water or buffer solutions in order to eliminate the non-fixed compounds. The detection of the sandwich complex can then be performed. Different detection principles can be used depending on the (bio)chemistry of the assay. During the steps preceding the detection of the sandwich complex, an electrochemical assay is performed in order to determine the efficiency of the microfluidic control unit. For instance conductimetry measurements allow an assessment of whether the entire microstructures are filled with solution; similarly, amperometric measurements may be performed in order to assess the efficiency of the various steps of the assay.

The assays or the reactions performed in the microchannels can be detected using various principles such as, but not limited to, luminescence (fluorescence, UV/Vis, bioluminescence, chemiluminescence, electrochemiluminescence), electrochemistry or mass spectrometry.

In some embodiments, the microchips are interfaced with a detector placed outside of the microchannels. In this case, the detector can be for example a photomultiplier tube or a mass spectrometer.

Before the detection step, the solution contained in the microchannel can be subjected to a purification and/or separation step (for example using chromatography, selective membranes, filters or electrophoretic separation).

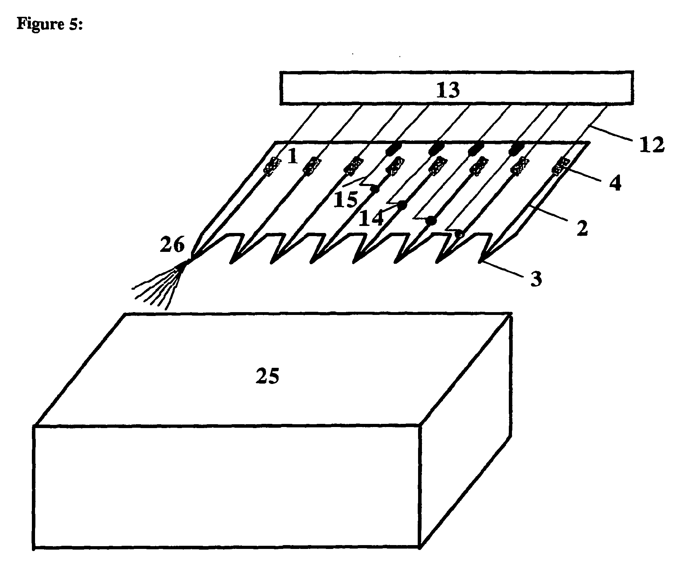

Figure 5 shows how the tip ends 3 of microchips 1 can be interfaced with a mass spectrometer 25 for the detection of a molecule. After completion of, for example, an immunological reaction in the microchannels 2, the complex is desorbed and eluted. The tip extremity 3 is then used to inject the eluate into the mass spectrometer by generation of an electrospray 26. To this end, the solution must be in contact with an electrode and to an electrochemical unit that serves to apply a high voltage between the microstructure and the mass spectrometer. Figure 5 shows such an electrode 14 which may be placed at various positions in the microchannels or in the connection extremity 4 of the microstructure. When this electrode is integrated in the microchannel, a conducting pad 15 is preferably directly manufactured on the microchip; the electrode is then further plugged into the electrochemical unit by way of electrically conductive connections 12 (e.g. screened cables).

In some embodiments, the detector can be integrated in the microchannels. In this case, the transducer may be for example an electrode or a photodiode.

In other embodiments, the microchannel tip is not used to fill in the microchannel with the solution of interest but is used to dispense the solution out of the microchannel into another separation, purification or detection apparatus. To this end, the microfluidic control unit allows control of the volume of solution dispensed from the microstructure tips. For instance, the microchannel can be used as an electrospray interface for MS analysis. In another embodiment the microchip can be placed horizontally and a series of solution reservoirs (e.g. a microtiter plate) can be placed vertically such as to enable easier sampling into the microstructures and then dispensing of the solution into the mass spectrometer.

Figure 6 presents several views of an example of apparatus according to the present invention, in which solution reservoirs 18 are placed in contact with the microstructure tips 3 in order to fill a series of microchannels with analyte solutions. It is straightforward that either the microchip or the solution reservoirs may be displaced in all x, y and z directions. The microchip supporting the microstructures is placed in a holder enabling interfacing with the electrochemical and the microfluidic control units (not shown) by way of electrical connections 15 and tubings 10'. In this case, the microchip can incorporate a solid phase such as to enable desalting, specific affinity assay or other sample preparation. A solution of spray composed for example of methanol, acetonitrile and acidic solution may be stored in the tubes 10' and can serve to desorb samples that have been previously immobilised in the microchip. In one embodiment, microbeads can be placed in a reservoir between the chip and the microfluidic control unit such as to enable sample pretreatment (as e.g. desalting or affinity reactions) prior to mass spectrometry analyses.

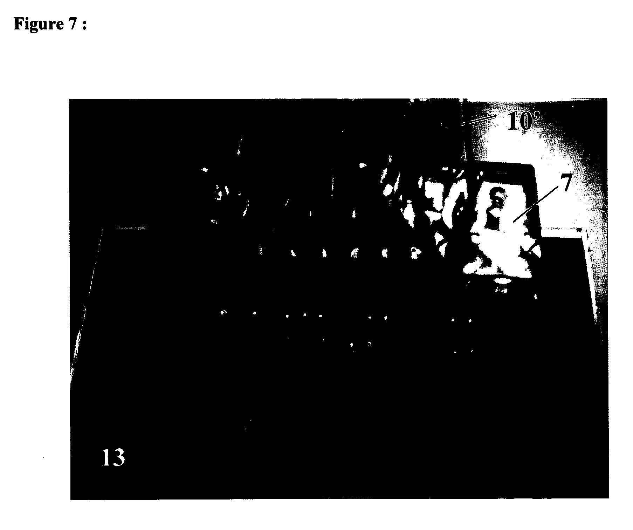

In some embodiment, the microstructure tip is an inlet on the side of the microchip in contact with the sample solution to be analysed. Figure 7 shows an example of such microstructure tip inserted in an apparatus of the present invention. In this example, reservoirs 28 can be integrated on the top of the microstructure tips such as to enable the sample solution to be dispensed via the tips into the microstructures. The solution can then enter the microstructures either by capillary action or by aspiration from the connection extremity. In some embodiments, the microchip can be connected to the fluidic control device in such a way that capillary fill will be prevented by the back pressure insured by the fluidic control device. Only when the fluidic control device is aspirating, can the sample enter the channel. Figure 7 also shows the electrochemical unit 13 with its electrical connections 12, which is used to perform the electrochemical assay(s) in each microstructure.

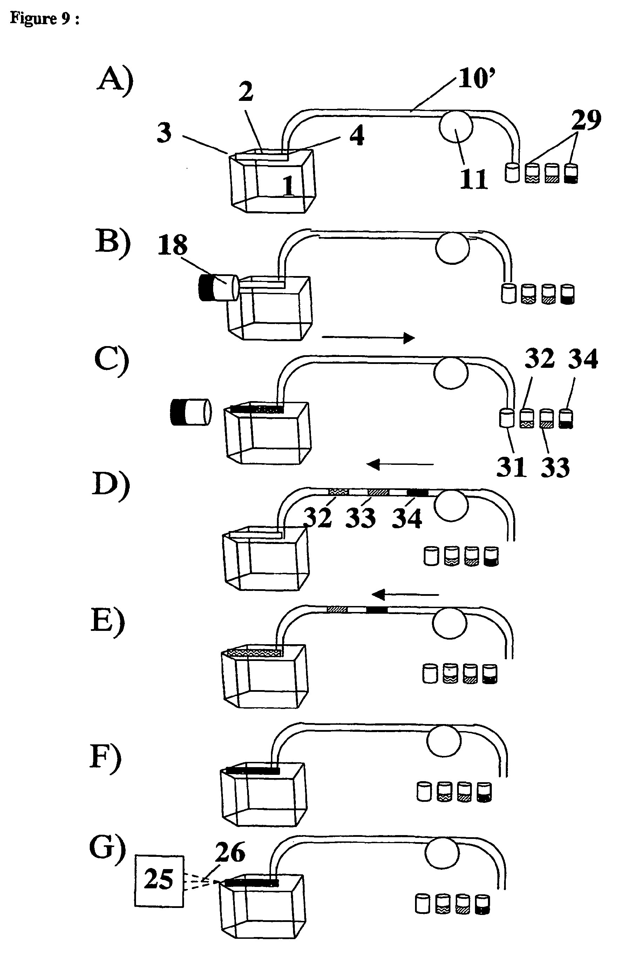

Figures 8 and 9 illustrate the sequence of an assay performed with an apparatus of the invention, depending on the way the sample and reagents are dispensed into the microstructures and with two different designs of microstructure tips. In Figure 8, a reservoir is integrated on the tip end of the microstructure and ensures contact of the solution with the chip. It is notable that this reservoir can be used to receive successive solutions for performing multi-step assays such as syntheses, analyses, and so forth. In one embodiment, different reagents 32, 33 and 34 can be loaded in the non-turbulent flow connection tubes 10' and separated with an inert solvent or even a gas bubble 31. Pumping the different reagents inside the microchip can make a reaction occur, such as but not limited to, ELISA, affinity assays, washing steps, desalting step, etc.

In some embodiments, the reagent 31 to 35 may contain beads that are pumped by means of the microfluidic control unit such as to pack them at the end of the connection tubings (10') or at a desired position within the microstructure. These beads may have various physico-chemical properties and may also be functionalised with molecules, depending on the use of these beads. Such beads addition may for instance be advantageously used to desalt a solution, to perform an affinity reaction or to synthetise compounds by combinatorial chemistry, notably with molecules previously grafted on these beads. In certain applications, a membrane can also be placed between the connection tubings (10') and the connection end of the microstructure (4) such as to enable filtration, or different reactions such as adsorption, desorption, desalting, immunocapture, enzymatic assay and so forth.

Integration of either beads or membrane within the apparatus of this invention is of particular interest in mass spectrometry analysis, where systematic desalting of the sample is generally required prior to injection into the mass spectrometer. The above features may thus be advantageously used in applications where the present apparatus serves for instance to inject samples into a mass spectrometer by electrospray ionisation (ESI) from the microchip or to dispense samples onto a plate devoted to mass spectrometry measurements using matrix assisted laser desorption ionisation (MALDI).

In another embodiment the assay is performed with the tip being placed in contact with the well for the sample loading.

In another embodiment, the contact between the connection extremity 4 of the microstructure and the microfluidic control unit 11 is not tight (see Figure 2) and enables the microchip to be filled by capillary action. It is important to note here that the flow of solution should stop at the end of the microstructure. To this end, a hydrophobic layer may optionally be placed around the microstructure outlet, thereby preventing cross-contamination of the apparatus. After the filling of the sample, pressure can be applied on the upper part of the support 7' serving as connection between the microchip and the microfluidic control unit such as to induce tight sealing and to prevent solution leakage. At this stage, a solution can be pumped towards and through the microchip without contaminating the microfluidic control unit. A succession of different analytes can then be pumped within the microstructures such as to place different solution as exemplified in Figures 3 and 4, as well as in the sequences of Figures 8 and 9. The fluidic tubing should have an internal diameter such that it may prevent generation of turbulent flows and that segments of different solutions can be pumped to the chip, said segments of solution being separated by an air bubble. For example each washing solution, secondary antibody or further reagent solutions (such as e.g. an enzyme substrate) can be preloaded in the tubes with an air bubble segment for separating them. Then, the pumping of these solutions through the microstructures allows the entire sandwich immunoassay to be performed without any manipulations and without external reagent addition.

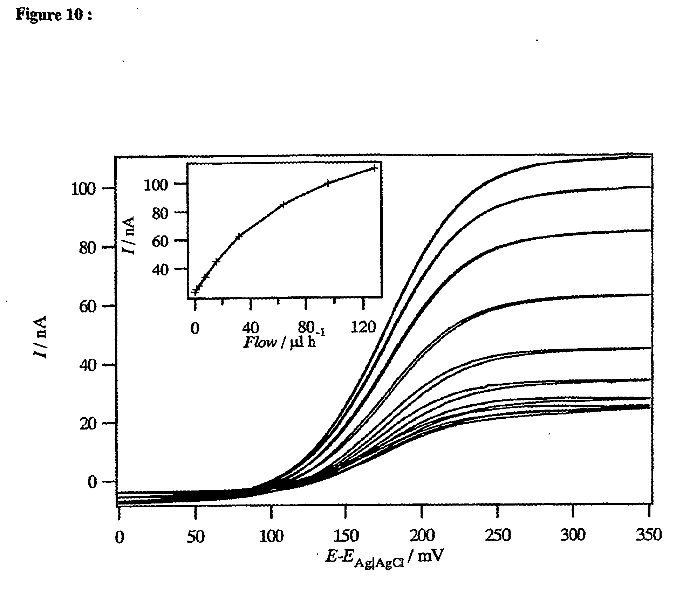

As a demonstration of the apparatus of this invention, experiments have been carried out by connecting the micro-chip to a syringe pump serving as microfluidic control unit in order to apply a forced convection into a series of microstructures. Only one microchannel is integrated in the apparatus of the invention which is similar to that shown in Figure 6, but with only one microfluidic connection. The microchips used here are 75 micron polyimide foils in which microstructures comprising a 100 x 60 x 10,000 $\mu$m microchannel with one tip and one connection extremity at each end of the microchannel are fabricated by plasma etching. These microstructures further incorporate gold microelectrodes and conductive tracks that are connected to a potentiostat which is the electrochemical unit used to perform the electrochemical assay which consists here in the oxidoreduction of an aqueous solution of 500 $\mu$M ferrocene methanol. The cyclic voltammetric response at a scan rate of 10 mV/s as a function of the flow rate (set between 0.2 and 128 $\mu$L/h) induced by a 100 $\mu$L syringe has been recorded and is presented in Figure 10. The insert in Figure 10 further shows the evolution of the plateau current at an applied potential of 300 mV versus silver/silver chloride, as a function of the flow rate. The intensity of the current is strongly dependent on the flow rate because the forced convection is constantly renewing the diffusion layer above the electrode.

## Claims

1. A microfluidic electrochemical assay apparatus comprising:

   at least one micro-chip, the or each said micro-chip possessing at least one sealed microchannel enabling microfluidic manipulations and having: a tip end adapted for uptake of a fluid sample into and/or discharge of a fluid sample from said microchannel; a microfluidic connection end; and an electrode integrated in said microchannel in such a manner that it is in direct contact with a fluid present in said microchannel; a microfluidic control unit communicating with said microfluidic connection end of said microchannel and adapted to push, pull or block fluids in said microchannel;

   **characterised by** an electrochemical unit adapted to monitor, via said at least one integrated electrode, the presence, velocity or flow of a fluid at the local position of said at least one integrated electrode, by electrochemical measurement of a reduction or oxidation reaction thereon.

2. Apparatus according to claim 1, wherein a signal resulting from the monitoring of the presence of said fluid is arranged to check the final assay result.

3. Apparatus according to claim 1, wherein a signal resulting from the monitoring of the velocity or flow of said fluid is arranged to calibrate or correct the final assay result..

4. Apparatus according to claim 1, 2 or 3, comprising a plurality of microchannels provided in one or a plurality of micro-chips, permitting simultaneous electrochemical measurement in more than one microchannel.

5. Apparatus according to claim 1, wherein said microfluidic control unit comprises a pump or a pipetting system.

6. Apparatus according to any preceding claim, further comprising a valve disposed between said microfluidic control unit and said microfluidic connection end of said at least one microchannel.

7. Apparatus according to any preceding claim, wherein the or each said microchip is made of polymer, glass, quartz or a combination thereof.

8. Apparatus according to any preceding claims, wherein the or each said microchip is disposable.

9. Apparatus according to any preceding claim, wherein the or each said microchip is produced by laser photoablation, injection moulding, embossing, plasma etching, elastomer casting, silicone technology or a combination thereof.

10. Apparatus according to any preceding claim, further comprising support means adapted to support said micro-chip(s) in relation to said microfluidic control unit in such a manner as to ensure fluid-tight connection therebetween.

11. Apparatus according to any preceding claim, further comprising a detector disposed outside the or each said microchannel, said detector(s) being interfaced with said micro-chip(s).

12. Apparatus according to claim 11, wherein said detector is a photomultiplier, a mass spectrometer or a nuclear magnetic resonance (NMR) system.

13. Apparatus according to any preceding claim, wherein said micro-chip comprises a network or array of interconnected microchannels.

14. Apparatus according to any preceding claim, wherein a polymer layer is laminated or glued to seal said microchannel.

15. Apparatus according to claim 14, comprising an arrangement of interconnected microchannels in which a plurality of microchannels converge into a single microchannel, whereby said arrangement comprises a single microchannel tip and a plurality of microfluidic connection ends, or a plurality of microchannel tips and a single microfluidic connection end.

16. Apparatus according to claim 14, wherein said interconnected microchannels are not disposed in the same plane of said micro-chip, but are fabricated in three dimensions.

17. Apparatus according to any preceding claim, wherein at least a portion of walls of said microchannel is modified by chemical, biological or physical means, or by the provision of porous material or by any combination of the aforesaid.

18. Apparatus according to any preceding claim, wherein said microchannel comprises a solid phase.

19. Apparatus according to claim 18, wherein said solid phase comprises molecules, a membrane, a gel, a sol-gel or beads.

20. Apparatus according to claim 18 or 19, further comprising molecules grafted onto at least said portion of walls of said microchannel and/or onto said membrane, gel, sol-gel or beads.

21. Apparatus according to claim 20, wherein said molecules are proteins, peptides, antigenes, antibodies, enzymes, oligonucleotides, nucleic acid sequences, haptens or a combination thereof.

22. Apparatus according to claim 20 or claim 21, wherein said molecules are grafted by physical or chemical adsorption, by covalent binding, or by a combination thereof.

23. Apparatus according to any of claims 19 to 22, wherein said membrane physically separates two solutions or phases.

24. Apparatus according to any preceding claim, wherein said tip is formed at the edge of said micro-chip.

25. Apparatus according to claim 24, wherein said tip tapers towards the end of said micro-chip.

26. Apparatus according to claim 24 or 25, wherein said tip has a pyramidal, a parallelepipedic or a conical shape.

27. Apparatus according to any preceding claim, wherein said tip is adapted to generate an electrospray by way of said at least one electrode integrated in said microchannel.

28. Apparatus according to any preceding claim, wherein said tip is integrated in or is surrounded by a fluid reservoir.

29. Apparatus according to any preceding claim, wherein said tip comprises an electrode.

30. Apparatus according to any preceding claim, wherein a support means comprises a clamping system to ensure fluid-tight connection between said microfluidic connection end(s) and said microfluidic control unit.

31. Apparatus according to any preceding claim, wherein said apparatus and/or said microchip can be displaced in x, y and/or z direction either manually or by means of an automated device.

32. Apparatus according to claim 31, wherein said manual or automated device permits modification of the orientation of the microchip in order to change the orientation angle of said microchannel tip.

33. Apparatus according to any preceding claim, further comprising a temperature control unit, an electrical isolation chamber (for example a Faraday cage) and/or a humidity-controlled chamber preventing evaporation.

34. Apparatus according to any preceding claim, wherein said electrochemical unit, said microfluidic control unit and, if provided, said support means are integrated in a single platform, so as to provide a portable system.

35. Apparatus according to any preceding claim that is further connected to and/or integrated into a computer.

36. A method of performing a microfluidic assay with in-situ electrochemical monitoring of the presence, velocity or flow of a fluid in a microchannel, using the apparatus of any preceding claim, the method comprising the steps of:

(a) placing a sample in contact with said microchannel tip;
(b) filling said microchannel with said sample, either by capillary action or by pumping or aspirating said sample by means of said microfluidic control unit;
(c) using said microfluidic control unit either to pull, push or block said sample in said microchannel;
(d) actuating said electrochemical unit to monitor, via said at least one integrated electrode, the presence, velocity or flow of a fluid at the local position of said at least one integrated electrode, by electrochemical measurement of a reduction or oxidation reaction thereon; and
(e) optionally, repeating above steps (a) to (d).

37. A method according to claim 36, wherein step (d) comprises monitoring the presence of said fluid and the signal obtained in step (d) is used to check the result of said microfluidic assay.

38. A method according to claim 36, wherein step (d) comprises monitoring the velocity or flow of said fluid and the signal obtained in step (d) is used to calibrate or correct the result of said microfluidic assay;

39. A method according to claim 36, 37 or 38, wherein a plurality of samples and/or other solutions are introduced into said microchannel using said microfluidic control unit.

40. A method according to claim 39, wherein said other solutions are washing solutions, buffer solutions and/or reagent solutions.

41. A method according to any of claims 36 to 40, wherein said fluid, said sample(s) or said other solution(s) contain one of an antibody, an enzyme, an oligonucleotide, a hapten, a DNA molecule, a nucleic acid sequence or the like.

42. A method according to any of claims 36 to 41, further comprising the step of adding an electroactive species to said sample(s) or said other solution(s) and monitoring the microfluidics thereof by performing an electrochemical assay(s), for example by measuring the generation of a current resulting from the reduction and/or the oxidation of said electroactive species at the local position of said at least one integrated electrode.

43. A method according to claim 42, wherein said in-situ electrochemical monitoring of the presence, absence, velocity or flow of a fluid in a microchannel is performed during at least one step of an affinity assay for which said at least one integrated electrode serves as electrochemical detection means for the calibration or checking.

44. A method according to claim 42 or 43, wherein said added electroactive species is a ferrocene compound.

45. A method according to any of claims 36 to 44, wherein software processes the data obtained during the electrochemical monitoring of the microfluidics to perform said internal calibration of the final detection signal.

46. A method according to any of claims 36 to 45, further comprising the step of bringing said microchannel tip into contact with a solution reservoir to enable the uptake or discharge of a sample and/or another solution.

47. A method according to any of claims 36 to 46, wherein said microchannel tip is used as the disposable part of pipetting device.

48. A method according to any of claims 36 to 47, wherein the filling of the sample in said microchannel by capillary action is prevented either by means of said microfluidic control unit or by the presence of a hydrophobic barrier at said microchannel tip.

49. A method according to any of claims 36 to 48, wherein said tip tapers towards the end of said micro-chip.

50. A method according to claim 49, wherein said tapered tip is inserted into a solution reservoir for fluid uptake and/or discharge.

51. A method according to claim 49, wherein said tip is used to generate an electrospray by way of said at least one electrode integrated in said microchannel.

52. A method according to any of claims 36 to 51, comprising the further step of injecting said sample(s) or said other solution(s) contained in said microchannel into a purification, separation and/or detection device, as for example a chromatograph, a spectrometer, a photometer, a gel, a column, a selective membrane, a filter, or an electrophoretic separation apparatus.

53. A method according to any of claims 36 to 52, wherein the assay performed in said microchannel is detected or followed using light absorption, luminescence (for example fluorescence, bioluminescence, chemiluminescence, electrochemiluminescence), electrochemistry or mass spectrometry.

54. A method according to claim 53, wherein the electrochemical signals measured for both said electrochemical monitoring of the presence, absence, velocity or flow of a fluid in said microchannel and said final microfluidic assay result are obtained by way of said at least one integrated electrode.

55. A method according to any of claims 36 to 54, for performing chemical and/or biological analysis and/or synthesis.

56. A method according to claim 55, wherein the final microfluidic result is obtained by mass spectrometry analysis.

57. A method according to claim 56, wherein said apparatus comprises means to desalt samples prior to injection into a mass spectrometer by generation of an electrospray or prior to dispensing of said samples onto a matrix assisted ion desorption ionisation (MALDI) plate.

58. Use of apparatus according to any of claims 1 to 35 to perform chemical and/or biological analysis and/or synthesis.

59. Use according to claim 58 in mass spectrometry analysis.

60. Use according to claim 58 or 59 to perform clinical, human or veterinary *in vitro* diagnostics.

61. Use according to claim 60 to perform immunological assays.

62. Use according to claim 58 to perform physico-chemical assays, toxicological assays, affinity assays microbiological assays and/or cellular assays.

63. Use according to claim 58 to perform lipophilicity measurements, ion transfer reactions, solubility assays and/or permeability tests.

64. Use according to claim 58 to perform synthesis by combinatorial chemistry.

65. Use according to any of claims 58 to 64 to perform chemical and/or biological analysis and/or synthesis with electrochemical internal calibration of the final assay result.

66. Use according to any of claims 58 to 65, wherein the signal obtained during the in-situ electrochemical monitoring of (a) the presence or absence or (b) the velocity or flow of an electroactive species serves (a) to check or (b) to calibrate or validate the final microfluidic assay result respectively.

67. Use according to any of claims 58 to 65 to perform fully automated analysis and/or synthesis.

**Patentansprüche**

1. Mikrofluidische elektrochemische Testapparatur, umfassend:

mindestens einen Mikrochip, wobei der oder jeder Mikrochip mindestens einen versiegelten Mikrokanal besitzt, der mikrofluidische Manipulationen gestattet und folgende Teile aufweist: ein Spitzenende, das zur Aufnahme einer Fluidprobe in den Mikrokanal und/oder zur Abgabe einer Fluidprobe aus dem Mikrokanal befähigt ist; ein mikrofluidisches Verbindungsende; und eine in den Mikrokanal so integrierte Elektrode, dass sie in direktem Kontakt mit einem im Mikrokanal anwesenden Fluid steht; eine mikrofluidische Steuereinheit, die mit dem mikrofluidischen Verbindungsende des Mikrokanals in Verbindung steht und Fluids im Mikrokanal drücken, ziehen oder blockieren kann;

**gekennzeichnet durch** ein elektrochemisches Gerät zur Überwachung über die mindestens eine integrierte Elektrode der Anwesenheit, Geschwindigkeit oder Strömung eines Fluids am Ort der mindestens einen integrierten Elektrode **durch** elektrochemische Messung einer Reduktions- oder Oxidationsreaktion darauf.

2. Apparatur nach Anspruch 1, worin ein Signal, das aus der Überwachung der Anwesenheit von Fluid resultiert, zur Überprüfung des endgültigen Testergebnisses verwendet werden kann.

**3.** Apparatur nach Anspruch 1, worin ein Signal, das aus der Überwachung der Geschwindigkeit oder Strömung des Fluids resultiert, zur Kalibrierung oder Korrektur des endgültigen Testergebnisses verwendet werden kann.

**4.** Apparatur nach Anspruch 1, 2 oder 3, umfassend eine Vielzahl von Mikrokanälen in ein oder mehreren Mikrochips, die die gleichzeitige elektrochemische Messung in mehr als einem Mikrokanal gestatten.

**5.** Apparatur nach Anspruch 1, worin die mikrofluidische Steuereinheit eine Pumpe oder ein Pipettiersystem umfasst.

**6.** Apparatur nach einem der vorhergehenden Ansprüche, ferner umfassend ein Ventil, das zwischen der mikrofluidischen Steuereinheit und dem mikrofluidischen Verbindungsende des mindestens einen Mikrokanals angeordnet ist.

**7.** Apparatur nach einem der vorhergehenden Ansprüche, worin der oder jeder Mikrochip aus Polymer, Glas, Quarz oder einer Kombination dieser Stoffe besteht.

**8.** Apparatur nach einem der vorhergehenden Ansprüche, worin der oder jeder Mikrochip ein Einwegprodukt ist.

**9.** Apparatur nach einem der vorhergehenden Ansprüche, worin der oder jeder Mikrochip durch Laserphotoablation, Spritzguss, Prägen, Plasmaätzen, Elastomerguss, Silikontechnologie oder eine Kombination dieser Techniken hergestellt wird.

**10.** Apparatur nach einem der vorhergehenden Ansprüche, ferner umfassend Trägermittel, die den bzw. die Mikrochip(s) relativ zu der mikrofluidischen Steuereinheit tragen können, so dass eine flüssigkeitsdichte Verbindung zwischen ihnen sichergestellt wird.

**11.** Apparatur nach einem der vorhergehenden Ansprüche, ferner umfassend einen Detektor, der auf der Außenseite des oder jedes Mikrokanals angeordnet ist, wobei der Detektor bzw. die Detektoren mit dem Mikrochip bzw. den Mikrochips verbunden sind.

**12.** Apparatur nach Anspruch 11, worin der Detektor ein Photomultiplikator, ein Massenspektrometer oder ein Kernspinsystem (NMR) ist.

**13.** Apparatur nach einem der vorhergehenden Ansprüche, worin der Mikrochip ein Netz oder eine Reihe von miteinander verbundenen Mikrokanälen umfasst.

**14.** Apparatur nach einem der vorhergehenden Ansprüche, worin eine Polymerschicht zum Versiegeln des Mikrokanals laminiert oder aufgeklebt ist.

**15.** Apparatur nach Anspruch 14, umfassend eine Anordnung von miteinander verbundenen Mikrokanälen, in denen eine Vielzahl von Mikrokanälen zu einem einzelnen Mikrokanal konvergieren, wobei diese Anordnung eine einzelne Mikrokanalspitze und eine Vielzahl von mikrofluidischen Verbindungsenden oder eine Vielzahl von Mikrokanalspitzen und ein einzelnes mikrofluidisches Verbindungsende umfasst.

**16.** Apparatur nach Anspruch 14, worin die miteinander verbundenen Mikrokanäle nicht in derselben Ebene des Mikrochips angeordnet sind, sondern in drei Dimensionen erzeugt werden.

**17.** Apparatur nach einem der vorhergehenden Ansprüche, worin mindestens ein Teil der Wände des Mikrokanals durch chemische, biologische oder physikalische Mittel oder durch Bereitstellung eines porösen Materials oder durch eine Kombination dieser Mittel modifiziert ist.

**18.** Apparatur nach einem der vorhergehenden Ansprüche, worin der Mikrokanal eine Festphase umfasst.

**19.** Apparatur nach Anspruch 18, worin die Festphase Moleküle, eine Membran, ein Gel, ein Sol-Gel oder Perlen umfasst.

**20.** Apparatur nach Anspruch 18 oder 19, ferner umfassend Moleküle, die auf mindestens den Teil der Wände des Mikrokanals und/oder auf die Membran, das Gel, Sol-Gel oder die Perlen aufgepfropft sind.

**21.** Apparatur nach Anspruch 20, worin die Moleküle Proteine, Peptide, Antigene, Antikörper, Enzyme, Oligonucleotide, Nucleinsäuresequenzen, Haptene oder eine Kombination daraus sind.

**22.** Apparatur nach Anspruch 20 oder 21, worin die Moleküle durch physikalische oder chemische Adsorption, durch kovalente Bindung oder durch eine Kombination dieser Methoden aufgepfropft sind.

**23.** Apparatur nach Anspruch 19 bis 22, worin die Membran zwei Lösungen oder Phasen physikalisch voneinander trennt.

**24.** Apparatur nach einem der vorhergehenden Ansprüche, worin die Spitze am Rand des Mikrochips geformt ist.

**25.** Apparatur nach Anspruch 24, worin sich die Spitze zum Ende des Mikrochips hin verjüngt.

**26.** Apparatur nach Anspruch 24 oder 25, worin die Spitze eine pyramidenförmige, parallelflache oder konische Gestalt aufweist.

**27.** Apparatur nach einem der vorhergehenden Ansprüche, worin die Spitze über die mindestens eine, im Mikrokanal integrierte Elektrode ein Elektrospray erzeugen kann.

**28.** Apparatur nach einem der vorhergehenden Ansprüche, worin die Spitze in ein Fluidreservoir integriert ist oder von diesem umgeben wird.

**29.** Apparatur nach einem der vorhergehenden Ansprüche, worin die Spitze eine Elektrode umfasst.

**30.** Apparatur nach einem der vorhergehenden Ansprüche, worin ein Trägermittel ein Klemmsystem umfasst, um die flüssigkeitsdichte Verbindung zwischen dem (den) mikrofluidischen Verbindungsende(n) und der mikrofluidischen Steuereinheit zu gewährleisten.

**31.** Apparatur nach einem der vorhergehenden Ansprüche, worin die Apparatur und/oder der Mikrochip in x-, y- und/oder z-Richtung entweder von Hand oder mit einer automatischen Vorrichtung verschoben werden kann.

**32.** Apparatur nach Anspruch 31, worin die manuelle oder automatische Vorrichtung die Veränderung der Orientierung des Mikrochips gestattet, um den Orientierungswinkel der Mikrokanalspitze zu verändern.

**33.** Apparatur nach einem der vorhergehenden Ansprüche, ferner umfassend eine Temperaturkontrolleinheit, eine elektrische Isolierkammer (beispielsweise ein Faradayscher Käfig) und/oder eine Evaporation verhindernde Kammer mit Feuchtigkeitskontrolle.

**34.** Apparatur nach einem der vorhergehenden Ansprüche, worin die elektrochemische Einheit, die mikrofluidische Steuereinheit, und wenn vorhanden, das Trägermittel in eine einzelne Plattform integriert sind, um ein tragbares System zu ergeben.

**35.** Apparatur nach einem der vorhergehenden Ansprüche, die ferner mit einem Computer verbunden und/oder in diesen integriert ist.

**36.** Verfahren zur Durchführung eines mikrofluidischen Tests mit elektrochemischer In-situ-Überwachung der Anwesenheit, Geschwindigkeit oder Strömung eines Fluids in einem Mikrokanal unter Verwendung der Apparatur nach einem der vorhergehenden Ansprüche, wobei das Verfahren folgende Schritte umfasst:

(a) Inberührungbringen einer Probe mit der Mikrokanalspitze;
(b) Füllen des Mikrokanals mit der Probe, entweder durch Kapillarwirkung oder durch Pumpen oder Aspirieren der Probe mittels der mikrofluidischen Steuereinheit;
(c) Verwenden der mikrofluidischen Steuereinheit zum Ziehen, Drücken oder Blockieren der Probe in den Mikrokanal;
(d) Betätigen der elektrochemischen Einheit zur Überwachung über die mindestens eine integrierte Elektrode der Anwesenheit, Geschwindigkeit oder Strömung eines Fluids am Ort der mindestens einen integrierten Elektrode durch elektrochemische Messung einer Reduktions- oder Oxidationsreaktion darauf; und
(e) wahlweise Wiederholen der Schritte (a) bis (d) oben.

**37.** Verfahren nach Anspruch 36, worin Schritt (d) die Überwachung der Anwesenheit des Fluids umfasst und das in Schritt (d) erhaltene Signal zur Überprüfung des Ergebnisses des mikrofluidischen Tests verwendet wird.

**38.** Verfahren nach Anspruch 36, worin Schritt (d) die Überwachung der Geschwindigkeit oder Strömung des Fluids umfasst und das in Schritt (d) erhaltene Signal zur Kalibrierung oder Korrektur des Ergebnisses des mikrofluidischen Tests verwendet wird.

**39.** Verfahren nach Anspruch 36, 37 oder 38, worin eine Vielzahl von Proben und/oder Lösungen mittels der mikrofluidischen Steuereinheit in den Mikrokanal eingebracht werden.

**40.** Verfahren nach Anspruch 39, worin die anderen Lösungen Waschlösungen, Pufferlösungen und/oder Reagenzlösungen sind.

**41.** Verfahren nach einem der Ansprüche 36 bis 40, worin das Fluid, die Probe(n) oder die andere(n) Lösung(en) einen Antikörper, ein Enzym, ein Oligonucleotid, ein Hapten, ein DNA-Molekül, eine Nucleinsäuresequenz oder dergleichen enthalten.

**42.** Verfahren nach einem der Ansprüche 36 bis 41, ferner umfassend den Schritt des Hinzufügens einer elektroaktiven Spezies zu der (den) Probe(n) oder anderen Lösung(en) und Überwachung der Mikrofluidik davon durch Durchführung eines elektrochemischen Tests bzw. elektrochemischer Tests, beispielsweise durch Messung der Erzeugung eines Stroms aufgrund der Reduktion und/oder Oxidation der elektroaktiven Spezies am Ort der mindestens einen integrierten Elektrode.

**43.** Verfahren nach Anspruch 42, worin die elektrochemische In-situ-Überwachung der Anwesenheit, Abwesenheit, Geschwindigkeit oder Strömung eines Fluids in einem Mikrokanal während mindestens eines Schritts eines Affinitätstests durchgeführt wird, für den die mindestens eine integrierte Elektrode als elektrochemisches Nachweismittel für Kalibrations- oder Prüfzwecke dient.

44. Verfahren nach Anspruch 42 oder 43, worin die zugefügte elektroaktive Spezies eine Ferrocen-Verbindung ist.

45. Verfahren nach einem der Ansprüche 36 bis 44, worin Software die bei der elektrochemischen Überwachung der Mikrofluidik erhaltenen Daten verarbeitet, um die interne Kalibrierung des endgültigen Nachweissignals durchzuführen.

46. Verfahren nach einem der Ansprüche 36 bis 45, ferner umfassend den Schritt des Inberührungbringens der Mikrokanalspitze mit einem Lösungsreservoir, damit eine Probe und/oder andere Lösung aufgenommen oder abgegeben werden kann.

47. Verfahren nach einem der Ansprüche 36 bis 46, worin die Mikrokanalspitze als Einwegteil der Pipettiervorrichtung verwendet wird.

48. Verfahren nach einem der Ansprüche 36 bis 47, worin das Füllen der Probe im Mikrokanal durch Kapillarwirkung entweder durch die mikrofluidische Steuereinheit oder durch die Anwesenheit einer hydrophoben Barriere an der Mikrokanalspitze verhindert wird.

49. Verfahren nach einem der Ansprüche 36 bis 48, worin sich die Spitze zum Ende des Mikrochips hin verjüngt.

50. Verfahren nach Anspruch 49, worin die verjüngte Spitze in ein Lösungsreservoir zur Aufnahme und/ oder Abgabe von Fluid eingeführt wird.

51. Verfahren nach Anspruch 49, worin die Spitze zur Erzeugung eines Elektrosprays durch die mindestens eine, in den Mikrokanal integrierte Elektrode verwendet wird.

52. Verfahren nach einem der Ansprüche 36 bis 51, umfassend den weiteren Schritt der Injektion von Probe(n) oder anderer/anderen Lösung(en), die im Mikrokanal enthalten sind, in eine Reinigungs-, Trenn- und/oder Nachweisvorrichtung, beispielsweise einen Chromatographen, einen Spektrometer, einen Photometer, ein Gel, eine Säule, eine selektive Membran, einen Filter oder eine elektrophoretische Trennapparatur.

53. Verfahren nach einem der Ansprüche 36 bis 52, worin der in dem Mikrokanal durchgeführte Test mit Lichtabsorption, Lumineszenz (beispielsweise Fluoreszenz, Biolumineszenz, Chemilumineszenz, Elektrochemilumineszenz), Elektrochemie oder Massenspektrometrie nachgewiesen oder verfolgt wird.

54. Verfahren nach Anspruch 53, worin die für die elektrochemische Überwachung der Anwesenheit, Abwesenheit, Geschwindigkeit oder Strömung eines Fluids im Mikrokanal gemessenen elektrochemischen Signale und das endgültige Ergebnis des mikrofluidischen Tests durch die mindestens eine integrierte Elektrode erhalten werden.

55. Verfahren nach einem der Ansprüche 36 bis 54 zur Durchführung einer chemischen und/oder biologischen Analyse und/oder Synthese.

56. Verfahren nach Anspruch 55, worin das endgültige mikrofluidische Ergebnis durch massenspektrometrische Analyse erhalten wird.

57. Verfahren nach Anspruch 56, worin die Apparatur Mittel zum Entsalzen von Proben vor der Injektion in einem Massenspektrometer durch Erzeugung eines Elektrosprays oder vor der Abgabe der Proben auf eine MALDI (Matrix Assisted Ion Desorption Ionisation) Platte umfasst.

58. Verwendung der Apparatur nach einem der Ansprüche 1 bis 35 zur Durchführung einer chemischen und/oder biologischen Analyse und/oder Synthese.

59. Verwendung nach Anspruch 58 in der massenspektrometrischen Analyse.

60. Verwendung nach Anspruch 58 oder 59 zur Durchführung von klinischen, human- oder veterinärmedizinischen diagnostischen Untersuchungen in vitro.

61. Verwendung nach Anspruch 60 zur Durchführung von immunologischen Tests.

62. Verwendung nach Anspruch 58 zur Durchführung von physikalisch-chemischen Tests, toxikologischen Untersuchungen, Affinitätstests, mikrobiologischen Tests und/oder zellulären Tests.

63. Verwendung nach Anspruch 58 zur Durchführung von Lipophilie-Messungen, Ionentransferreaktionen, Löslichkeitstests und/oder Permeabilitätstests.

64. Verwendung nach Anspruch 58 zur Durchführung einer Synthese durch kombinatorische Chemie.

65. Verwendung nach einem der Ansprüche 58 bis 64 zur Durchführung einer chemischen und/oder biologischen Analyse und/oder Synthese mit elektrochemischer interner Kalibrierung des Endergebnisses des Tests.

66. Verwendung nach einem der Ansprüche 58 bis 65, worin das bei der elektrochemischen In-situ-Überwachung (a) der Anwesenheit oder Abwesenheit oder (b) der Geschwindigkeit oder Strömung einer elektroaktiven Spezies erhaltene Signal (a) zur Überprüfung oder (b) zur Kalibrierung oder Validierung des endgültigen Ergebnisses des mikrofluidischen Tests dient.

67. Verwendung nach einem der Ansprüche 58 bis 65 zur Durchführung einer vollautomatischen Analyse und/oder Synthese.

**Revendications**

1. Dispositif de dosage électrochimique microfluidique, comprenant :

   au moins une micropuce, ladite micropuce ou chacune desdites micropuces possédant au moins un microcanal scellé permettant les manipulations microfluidiques et comportant : une extrémité de bout conçue pour la prise d'un échantillon de fluide dans ledit microcanal et/ou le déversement d'un échantillon de fluide dudit microcanal ; une extrémité de raccord microfluidique ; et une électrode intégrée dans ledit microcanal de manière à être au contact direct d'un fluide présent dans ledit microcanal ; une unité de régulation microfluidique communiquant avec ladite extrémité de raccord microfluidique dudit microcanal et conçue pour pousser, amener ou bloquer des fluides dans ledit microcanal ;

   **caractérisé par** une unité électrochimique conçue pour contrôler, via ladite au moins une électrode intégrée, la présence, la vitesse ou l'écoulement d'un fluide au niveau de la position locale de ladite au moins une électrode intégrée, par mesure électrochimique d'une réaction de réduction ou d'oxydation sur celle-ci.

2. Dispositif selon la revendication 1, dans lequel un signal résultant du contrôle de la présence dudit fluide est conçu pour vérifier le résultat final du dosage.

3. Dispositif selon la revendication 1, dans lequel un signal issu du contrôle de la vitesse ou de l'écoulement dudit fluide est conçu pour calibrer ou corriger le résultat final du dosage.

4. Dispositif selon la revendication 1, 2 ou 3, comprenant une pluralité de microcanaux prévus dans une micropuce ou une pluralité de micropuces, permettant la mesure électrochimique simultanée dans plus d'un microcanal.

5. Dispositif selon la revendication 1, dans lequel ladite unité de régulation microfluidique comprend une pompe ou un système de pipetage.

6. Dispositif selon l'une quelconque des revendications précédentes, comprenant en outre une valve disposée entre ladite unité de régulation microfluidique et ladite extrémité de raccord microfluidique dudit au moins un microcanal.

7. Dispositif selon l'une quelconque des revendications précédentes, dans lequel ladite micropuce ou chacune desdites micropuces est constituée de polymère, de verre, de quartz ou d'une combinaison de ceux-ci.

8. Dispositif selon l'une quelconque des revendications précédentes, dans lequel ladite micropuce ou chacune desdites micropuces est jetable.

9. Dispositif selon l'une quelconque des revendications précédentes, dans lequel ladite micropuce ou chacune desdites micropuces est fabriquée par photoablation laser, moulage par injection, estampage, attaque au plasma, coulée d'élastomères, technologie des composants au silicium ou une combinaison de ceux-ci.

10. Dispositif selon l'une quelconque des revendications précédentes, comprenant en outre un moyen de soutien conçu pour soutenir ladite (lesdites) micropuce(s) par rapport à ladite unité de régulation microfluidique de manière à assurer un raccord étanche aux fluides entre elles.

11. Dispositif selon l'une quelconque des revendications précédentes, comprenant en outre un détecteur disposé à l'extérieur dudit microcanal ou de chacun desdits microcanaux, ledit (lesdits) détecteur(s) s'interfaçant avec ladite (lesdites) micropuce(s).

12. Dispositif selon la revendication 11, dans lequel ledit détecteur est un photomultiplicateur, un spectromètre de masse ou un système à résonance magnétique nucléaire (NMR).

13. Dispositif selon l'une quelconque des revendications précédentes, dans lequel ladite micropuce comprend un réseau ou une matrice de microcanaux interconnectés.

14. Dispositif selon l'une quelconque des revendications précédentes, dans lequel une couche polymère est pelliculée ou collée pour sceller ledit microcanal.

**15.** Dispositif selon la revendication 14, comprenant un agencement de microcanaux interconnectés dans lequel une pluralité de microcanaux convergent vers un seul microcanal, en vertu de quoi ledit agencement comprend un seul bout de microcanal et une pluralité d'extrémités de raccord microfluidiques, ou une pluralité de bouts de microcanaux et une seule extrémité de raccord microfluidique:

**16.** Dispositif selon la revendication 14, dans lequel lesdits microcanaux interconnectés ne sont pas disposés dans le même plan que celui de la micropuce, mais sont fabriqués en trois dimensions.

**17.** Dispositif selon l'une quelconque des revendications précédentes, dans lequel une partie au moins des parois dudit microcanal est modifiée par des moyens chimiques, biologiques ou physiques ou par apport d'un matériau poreux, ou par une combinaison quelconque de ceux-ci.

**18.** Dispositif selon l'une quelconque des revendications précédentes, dans lequel ledit microcanal comprend une phase solide.

**19.** Dispositif selon la revendication 18, dans lequel ladite phase solide comprend des molécules, une membrane, un gel, un sol-gel ou des billes.

**20.** Dispositif selon la revendication 18 ou 19, comprenant en outre des molécules greffées au moins sur ladite partie des parois dudit microcanal et/ou sur ladite membrane, ledit gel, ledit sol-gel ou lesdites billes.

**21.** Dispositif selon la revendication 20, dans lequel lesdites molécules sont des protéines, des peptides, des antigènes, des anticorps, des enzymes, des oligonucléotides, des séquences d'acide nucléique, des haptènes ou une combinaison de ceux-ci.

**22.** Dispositif selon la revendication 20 ou la revendication 21, dans lequel lesdites molécules sont greffées par adsorption physique ou chimique, par liaison covalente ou par une combinaison de ceux-ci.

**23.** Dispositif selon l'une quelconque des revendications 19 à 22, dans lequel ladite membrane sépare physiquement deux solutions ou phases.

**24.** Dispositif selon l'une quelconque des revendications précédentes, dans lequel ledit bout est formé dans la tranche de ladite micropuce.

**25.** Dispositif selon la revendication 24, dans lequel ledit bout s'effile en direction de l'extrémité de ladite micropuce.

**26.** Dispositif selon la revendication 24 ou 25, dans lequel ledit bout présente une forme pyramidale, une forme parallélépipédique ou une forme conique.

**27.** Dispositif selon l'une quelconque des revendications précédentes, dans lequel ledit bout est conçu pour générer une électronébulisation au moyen de ladite au moins une électrode intégrée dans ledit microcanal.

**28.** Dispositif selon l'une quelconque des revendications précédentes, dans lequel ledit bout est intégré dans un réservoir à fluide ou entouré d'un réservoir à fluide.

**29.** Dispositif selon l'une quelconque des revendications précédentes, dans lequel ledit bout comprend une électrode.

**30.** Dispositif selon l'une quelconque des revendications précédentes, dans lequel un moyen de soutien comprend un système de serrage pour assurer un raccord étanche aux fluides entre ladite (lesdites) extrémité(s) de raccord microfluidique(s) et ladite unité de régulation microfluidique.

**31.** Dispositif selon l'une quelconque des revendications précédentes, ledit dispositif et/ou ladite micropuce pouvant être déplacé(e)(s) dans les directions x, y et/ou z soit manuellement soit au moyen d'un automate.

**32.** Dispositif selon la revendication 31, dans lequel ledit moyen manuel ou ledit automate permet de modifier l'orientation de la micropuce afin de changer l'angle d'orientation dudit bout de microcanal.

**33.** Dispositif selon l'une quelconque des revendications précédentes, comprenant en outre une unité de régulation de la température, une enceinte d'isolation électrique (par exemple une cage de Faraday) et/ou une enceinte à humidité régulée empêchant l'évaporation.

**34.** Dispositif selon l'une quelconque des revendications précédentes, dans lequel ladite unité électrochimique, ladite unité de régulation microfluidique et, s'il est prévu, ledit moyen de soutien sont intégrés dans une seule plate-forme, de manière à fournir un système portable.

**35.** Dispositif selon l'une quelconque des revendications précédentes, en outre raccordé et/ou intégré à un ordinateur.

**36.** Procédé de réalisation d'un dosage microfluidique avec contrôle électrochimique in situ de la présence, de la vitesse ou de l'écoulement d'un fluide dans un microcanal, à l'aide du dispositif selon l'une quelconque des revendications précédentes, le procédé comprenant les étapes de :

(a) mise en place d'un échantillon au contact dudit bout de microcanal ;

(b) remplissage dudit microcanal par ledit échantillon, soit par action capillaire soit par pompage ou aspiration dudit échantillon au moyen de ladite unité de régulation microfluidique ;

(c) utilisation de ladite unité de régulation microfluidique pour aspirer, pousser ou bloquer ledit échantillon dans ledit microcanal ;

(d) actionnement de ladite unité électrochimique pour contrôler, via ladite au moins une électrode intégrée, la présence, la vitesse ou l'écoulement d'un fluide au niveau de la position locale de ladite au moins une électrode intégrée, par mesure électrochimique d'une réaction de réduction ou d'oxydation sur celle-ci ; et

(e) répétition facultative des étapes (a) à (d) ci-dessus.

**37.** Procédé selon la revendication 36, dans lequel l'étape (d) comprend le contrôle de la présence dudit fluide et le signal obtenu à l'étape (d) est utilisé pour vérifier le résultat dudit dosage microfluidique.

**38.** Procédé selon la revendication 36, dans lequel l'étape (d) comprend le contrôle de la vitesse ou de l'écoulement dudit fluide et le signal obtenu à l'étape (d) est utilisé pour calibrer ou pour corriger le résultat dudit dosage microfluidique.

**39.** Procédé selon la revendication 36, 37 ou 38, dans lequel une pluralité d'échantillons et/ou d'autres solutions sont introduits dans ledit microcanal à l'aide de l'unité de régulation microfluidique.

**40.** Procédé selon la revendication 39, dans lequel lesdites autres solutions sont des solutions de lavage, des solutions tampons et/ou des solutions de réactifs.

**41.** Procédé selon l'une quelconque des revendications 36 à 40, dans lequel ledit fluide, ledit (lesdits) échantillon(s) ou ladite (lesdites) autre(s) solution(s) contiennent un des éléments suivants : un anticorps, une enzyme, un oligonucléotide, un haptène, une molécule d'ADN, une séquence d'acide nucléotide ou un élément similaire.

**42.** Procédé selon l'une quelconque des revendications 36 à 41, comprenant en outre l'étape d'addition d'une espèce électroactive audit (auxdits) échantillon(s) ou à ladite (auxdites) autre(s) solution(s) et de contrôle de sa microfluidique par réalisation d'un (de plusieurs) dosage(s) électrochimique(s), par exemple par mesure de la génération d'un courant résultant de la réduction et/ou l'oxydation de ladite espèce électroactive au niveau de la position locale de ladite au moins une électrode intégrée.

**43.** Procédé selon la revendication 42, dans lequel ledit contrôle électrochimique in situ de la présence, de l'absence, de la vitesse ou de l'écoulement d'un fluide dans un microcanal est réalisé durant au moins une étape d'un dosage d'affinité pour lequel ladite au moins une électrode intégrée sert de moyen de détection électrochimique pour le calibrage ou la vérification.

**44.** Procédé selon la revendication 42 ou 43, dans lequel ladite espèce électroactive additionnée est un composé de ferrocène.

**45.** Procédé selon l'une quelconque des revendications 36 à 44, dans lequel un logiciel traite les données obtenues durant le contrôle électrochimique de la microfluidique pour réaliser ledit calibrage interne du signal de détection final.

**46.** Procédé selon l'une quelconque des revendications 36 à 45, comprenant en outre l'étape d'amenée dudit bout de microcanal au contact d'un réservoir à solution pour permettre la prise ou le déversement d'un échantillon et/ou d'une autre solution.

**47.** Procédé selon l'une quelconque des revendications 36 à 46, dans lequel ledit bout de microcanal est utilisé comme partie jetable d'un dispositif de pipetage.

**48.** Procédé selon l'une quelconque des revendications 36 à 47, dans lequel le remplissage de l'échantillon dans ledit microcanal par action capillaire est empêché soit au moyen de ladite unité de régulation microfluidique soit par la présence d'une barrière hydrophobe au niveau dudit bout de microcanal.

**49.** Procédé selon l'une quelconque des revendications 36 à 48, dans lequel ledit bout s'effile en direction de l'extrémité de ladite micropuce.

**50.** Procédé selon la revendication 49, dans lequel ladite puce effilée est insérée dans un réservoir à solution pour la prise et/ou le déversement de fluide.

**51.** Procédé selon la revendication 49, dans lequel ledit bout est utilisé pour générer une électronébulisation au moyen de ladite au moins une électrode intégrée dans ledit microcanal.

**52.** Procédé selon l'une quelconque des revendications 36 à 51, comprenant l'étape supplémentaire d'injection dudit (desdits) échantillon(s) ou de ladite (desdites) autre(s) solution(s) contenu(e)(s) dans ledit microcanal dans un dispositif de purification, de séparation et/ou de détection, comme, par exemple, un chromatographe, un spectromètre, un photomètre, un gel, une colonne, une membrane sélective, un filtre ou un dispositif de séparation électrophorétique.

**53.** Procédé selon l'une quelconque des revendications 36 à 52, dans lequel le dosage réalisé dans ledit microcanal est détecté ou suivi par absorption de lumière, luminescence (par exemple fluorescence, bioluminescence, chimioluminescence, électrochimioluminescence), électrochimie ou spectrométrie de masse.

**54.** Procédé selon la revendication 53, dans lequel les signaux électrochimiques mesurés pour ledit contrôle électrochimique de la présence, de l'absence, de la vitesse ou de l'écoulement d'un fluide dans ledit microcanal ainsi que pour ledit résultat final de dosage microfluidique sont obtenus grâce à ladite au moins une électrode intégrée.

**55.** Procédé selon l'une quelconque des revendications 36 à 54, pour réaliser une analyse et/ou une synthèse chimique(s) et/ou biologique(s).

**56.** Procédé selon la revendication 55, dans lequel le résultat microfluidique final est obtenu par analyse par spectrométrie de masse.

**57.** Procédé selon la revendication 56, dans lequel ledit dispositif comprend un moyen pour dessaler des échantillons avant leur injection dans un spectromètre de masse par génération d'une électronébulisation ou avant l'application desdits échantillons sur une plaque de désorption-ionisation laser assistée par matrice (MALDI).

**58.** Utilisation du dispositif selon l'une quelconque des revendications 1 à 35 pour réaliser une analyse et/ou une synthèse chimique(s) et/ou biologique(s).

**59.** Utilisation selon la revendication 58 en analyse par spectrométrie de masse.

**60.** Utilisation selon la revendication 58 ou 59 pour réaliser des diagnostics cliniques, humains ou vétérinaires in vitro.

**61.** Utilisation selon la revendication 60 pour réaliser des dosages immunologiques.

**62.** Utilisation selon la revendication 58 pour réaliser des dosages physico-chimiques, des dosages toxicologiques, des dosages d'affinité, des dosages microbiologiques et/ou des dosages cellulaires.

**63.** Utilisation selon la revendication 58 pour réaliser des mesures de lipophilicité, des réactions de transfert d'ions, des dosages de solubilité et/ou des essais de perméabilité.

**64.** Utilisation selon la revendication 58 pour réaliser une synthèse par chimie combinatoire.

**65.** Utilisation selon l'une quelconque des revendications 58 à 64 pour réaliser une analyse et/ou une synthèse chimique(s) et/ou biologique(s) avec calibrage électrochimique interne du résultat du dosage final.

**66.** Utilisation selon l'une quelconque des revendications 58 à 65, dans lequel le signal obtenu durant le contrôle électrochimique in situ (a) de la présence ou de l'absence ou (b) de la vitesse ou de l'écoulement d'une espèce électroactive sert respectivement (a) à vérifier ou (b) à calibrer ou valider le résultat du dosage microfluidique.

**67.** Utilisation selon l'une quelconque des revendications 58 à 65 pour réaliser une analyse et/ou une synthèse entièrement automatisée(s).

**Figure 1:**

A)

B)

**Figure 2:**

A)

B)

**Figure 3:**

Figure 4:

**Figure 5:**

**Figure 6A :**

**Figure 6B :**

**Figure 6C :**

**Figure 6D :**

**Figure 7 :**

Figure 8 :

**Figure 9 :**

Figure 10 :